# EUROPEAN PATENT APPLICATION

(11) **EP 4 137 964 A1**
(43) Date of publication of application: **22.02.2023**
(21) Application number: 21869651.6
(22) Date of filing: 13.09.2021
(51) Int. Cl.: G06F 16/2457, G06F 16/248, G06F 16/332

(54) **ELECTRONIC DEVICE PROVIDING INFORMATION ABOUT REASON WHY RESPONSE WAS CHANGED, AND OPERATION METHOD THEREFOR**

(30) Priority: 16.09.2020 KR 20200119379
(71) Applicant: Samsung Electronics Co., Ltd., Gyeonggi-do 16677 (KR)
(72) Inventor: CHOI, Hyungtak, Suwon-si, Gyeonggi-do 16677 (KR); RYU, Jongyoub, Suwon-si, Gyeonggi-do 16677 (KR); LEE, Hojung, Suwon-si, Gyeonggi-do 16677 (KR)
(74) Representative: HGF
(86) International application number: PCT/KR2021/012409
(87) International publication number: WO 2022/060029

(57) **Abstract**

Provided is a method of providing, by an electronic device, information about a reason why a response has changed, the method including: outputting a first response by processing at least one module according to a first input; obtaining information about a history of a second response output according to a second input having a same intention as an intention of the first input, the second response being different from the first response; identifying, as a changed module, a module operated differently from at least one module operated according to the second input from among at least one module operated according to the first input, based on the obtained information; and providing information about the reason why the first response has changed from the second response based on the changed module.

## Description

### TECHNICAL FIELD

This application is claiming priority to Korean Patent Application No. 1 0-2020-0119379, filed on September 16, 2020, in the Korean Intellectual Property Office, the disclosures of which are incorporated by reference herein in their entireties.

The disclosure relates to an electronic device and an operating method, for providing information about a reason why a response has changed.

### BACKGROUND ART

An electronic device may provide, in response to a user input having the same intention as that of a user input with respect to a previous response, a new response different from the previous response, due to various causes, by outputting a response adaptively determined with respect to a user input in consideration of a change of a user's surrounding environment or outputting a response using a newly updated artificial intelligence (Al) model.

However, the user may not know a reason why a current response and the previous response are different even though a user input having the same intention is input. Accordingly, even if a user prefers the previous response to the current response, the user does not know how to control the electronic device.

Therefore, there is a need for a method for providing a user with a reason why a current response is different from the previous response with respect to the same user input, to provide a user's desired response.

### DESCRIPTION OF EMBODIMENTS

### TECHNICAL PROBLEM

Embodiments of the disclosure provide an electronic device and operating method for generating information about a reason why a response has changed.

Also, Embodiments of the disclosure provide a computer-readable recording medium having recorded thereon a program for executing the method on a computer. It should be noted that embodiments of the disclosure are not limited to the above-described embodiments, and other embodiments may exist.

### TECHNICAL SOLUTION TO PROBLEM

According to an example embodiment of the disclosure may provide a method of providing, by an electronic device, information about a reason why a response has changed, the method including: outputting a first response by processing at least one module according to a first input; obtaining information about a history of a second response output according to a second input having a same intention as an intention of the first input, the second response being different from the first response; identifying, as a changed module, a module operated differently from at least one module operated according to the second input from among the at least one module operated according to the first input, based on the obtained information; and providing, information about the reason why the first response has changed from the second response, based on the changed module.

According to an example embodiment of the disclosure an electronic device for providing information about a reason why a response has changed, the electronic device including: an outputter comprising output circuitry configured to output a first response by processing at least one module according to a first input; and a processor configured to: obtain information about a history of a second response output according to a second input having a same intention as an intention of the first input, the second response being different from the first response, identify, as a changed module, a module operated differently from at least one module operated according to the second input from among the at least one module operated according to the first input, based on the obtained information, and provide information about a reason why the first response has changed from the second response, based on the changed module.

According to an example embodiment of the disclosure there may provide a computer-readable recording medium having recorded thereon a program for implementing the method according to various embodiments.

### BRIEF DESCRIPTION OF DRAWINGS

The above and other aspects, features and advantages of certain embodiments of the present disclosure will be more apparent from the following detailed description, taken in conjunction with the accompanying drawings.
FIG. 1 is a block diagram illustrating an example of providing information about a reason why a response has changed, according to various embodiments.
FIG. 2 is a block diagram illustrating an example configuration of an electronic device according to various embodiments.
FIG. 3 is a block diagram illustrating an example configuration of an electronic device according to various embodiments.
FIG. 4 is a flowchart illustrating an example method of providing information about a reason why a response has changed, according to various embodiments.
FIG. 5 is a diagram illustrating an example of providing information about a reason why a response has changed, according to various embodiments.
FIG. 6 is a diagram illustrating an example in which at least one module operates in response to a user voice input, according to various embodiments.
FIG. 7 is a flowchart illustrating an example method of identifying a changed module from among modules operated according to a first user input, according to various embodiments.
FIG. 8 is a flowchart illustrating an example method of identifying a changed module from among modules operated according to a first user input, according to various embodiments.

### MODE OF DISCLOSURE

Throughout the disclosure, the expression "at least one of a, b or c" indicates only a, only b, only c, both a and b, both a and c, both b and c, all of a, b, and c, or variations thereof.

Hereinafter, various example embodiments of the disclosure will be described in greater detail with reference to the appended drawings. However, the disclosure can be implemented in various different forms, and is not limited to the example embodiments of the disclosure described herein. Also, in the drawings, portions irrelevant to the description may not be shown to simply describe the disclosure, and throughout the entire disclosure, similar components may be assigned like reference numerals.

In this disclosure, it will be understood that the case in which a certain portion is "connected" to another portion includes the case in which the portion is "electrically connected" to the other portion with another device in between, as well as the case in which the portion is "directly connected" to the other portion. Also, it will be understood that when a certain portion "includes" a certain component, the portion does not exclude another component but can further include another component, unless the context clearly dictates otherwise.

A function related to artificial intelligence according to the disclosure may operate through a processor and a memory. The processor may be configured with a single processor or a plurality of processors. The single processor or each of the plurality of processors may include, for example, and without limitation, a general-purpose processor (for example, a central processing unit (CPU), an application processor (AP), and a digital signal processor (DSP)), a graphics-dedicated processor (for example, a graphics processing unit (GPU), a vision processing unit (VPU)), an artificial intelligence-dedicated processor (for example, a neural processing unit (NPU)), or the like. The single processor or the plurality of processors may perform a control operation of processing input data according to a predefined operation rule or artificial intelligence model stored in a memory. When the single processor or each of the plurality of processors is an artificial intelligence-dedicated processor, the artificial intelligence-dedicated processor may be designed as a specialized hardware structure for processing a predefined artificial intelligence model.

The predefined operation rule or artificial intelligence model may be created through training. Creating the predefined operation rule or artificial intelligence model through training may refer, for example, to creating a predefined operation rule or artificial intelligent model set to perform a desired characteristic (or a purpose) when a basic artificial intelligence model is trained with a plurality of pieces of training data by a learning algorithm. The training may be performed by an apparatus of performing artificial intelligence according to the disclosure or by a separate server and/or system. The learning algorithm may include, for example, and without limitation, supervised learning, unsupervised learning, semi-supervised learning, reinforcement learning, or the like, although not limited to the above-mentioned examples.

The artificial intelligence model may be configured with a plurality of neural network layers. Each of the plurality of neural network layers may have a plurality of weight values, and perform a neural network arithmetic operation through an arithmetic operation between an arithmetic operation result of a previous layer and the plurality of weight values. The plurality of weight values of the plurality of neural network layers may be optimized by a training result of the artificial intelligence model. For example, the plurality of weight values may be updated such that a loss value or a cost value obtained by the artificial intelligence model during a training process is reduced or minimized. An artificial neural network may include a deep neural network (DNN), and the artificial neural network may include, for example, and without limitation, a convolutional neural network (CNN), a deep neural network (DNN), a recurrent neural network (RNN), a restricted boltzmann machine (RBM), a deep belief network (DBN), a bidirectional recurrent deep neural network (BRDNN), Deep Q-Networks, or the like, although not limited to the above-mentioned examples.

Hereinafter, the disclosure will be described in greater detail with reference to the accompanying drawings.

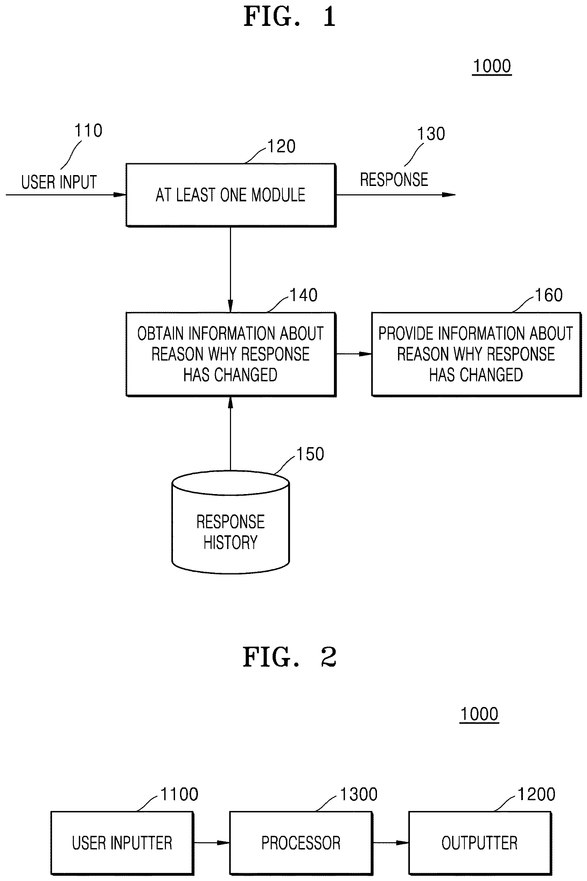

FIG. 1 is a block diagram illustrating an example of providing information about a reason why a response has changed, according to various embodiments.

Referring to FIG. 1, an electronic device 1000 according to an embodiment of the disclosure may be a device capable of processing at least one module 120 according to a user input 110 and outputting a response 130 as a processed result of the at least one module 120. The module may, for example, and without limitation, include various processing circuitry and/or executable program instructions. The electronic device 1000 according to an embodiment of the disclosure may obtain, with respect to the response 130 currently output, information about a reason why the response 130 has changed from a previous response, in operation 140, and provide the obtained information to a user, in operation 160.

The electronic device 1000 according to an embodiment of the disclosure may be implemented as one or more of various devices. For example, the electronic device 1000 described in the present disclosure may include a digital camera, a smart phone, a laptop computer, a tablet PC, an e-book terminal, a digital broadcasting terminal, personal digital assistants (PDA), a portable multimedia player (PMP), a navigation system, a MP3 player, a vehicle, an artificial intelligence (Al) speaker, etc., although not limited thereto. The electronic device 1000 described in the present disclosure may be a wearable device that is wearable by a user. The wearable device may include at least one of an accessory type device (for example, a watch, a ring, a wrist band, an ankle band, a necklace, glasses, or contact lenses), a head-mounted-device (HMD), a device (for example, electronic clothing) combined with fabrics or clothes, a body attaching type device (for example, a skin pad), a bio-implantable device (for example, an implantable circuit), or the like, although not limited thereto.

According to an embodiment of the disclosure, the electronic device 1000 may receive the user input 110 through an interactive interface, and output a response 130 with respect to the user input 110. The interactive interface may include, for example, an interface for users, which receives an input (for example, a voice input or a text input) from a user, and provides a response with respect to the input from the user. According to an embodiment of the disclosure, the interactive interface may include, for example, a virtual assistant, an artificial intelligence (Al) assistant, etc., although not limited thereto. The virtual assistant or the Al assistant may include a software agent including, for example, executable instructions, that processes a task requested by a user and provides a service specialized for the user.

The at least one module 120 according to an embodiment of the disclosure may recognize the user input 110, generate the response 130 with respect to the recognized user input 110, and output the response 130.

For example, the module 120 may include various modules including various processing circuitry and/or executable program instructions, such as, for example, and without limitation, an automatic speech recognition (ASR) module, a device dispatcher (DD), a device selector (DS) module, a domain classifier (DC) module, a natural language understanding (NLU) module, a dialog manager (DM) module, a natural language generator (NLG) module, etc. However, the module 120 is not limited to the above-mentioned examples, and the module 120 according to an embodiment of the disclosure may include various kinds of modules required to output the response 130 according to the user input 110.

The response 130 according to an embodiment of the disclosure may be output when the at least one module 120 operates based on the user input 110. According to an embodiment of the disclosure, the response 130 may be output in such a way that a message related to the response 130 is output through the electronic device 1000 or an external device (not shown), or an action corresponding to the response 130 is performed by the electronic device 1000 or the external device (not shown).

The message related to the response 130 according to an embodiment of the disclosure may be, for example, output as a voice signal through a speaker, or displayed through a display. The action corresponding to the response 130 according to an embodiment of the disclosure may include various kinds of operations that may be performed by the electronic device 1000 or the external device (not shown).

For example, in response to a user input 110 including "play music just played", "music 1" lately played may be again played as an action corresponding to the response 130 by an external speaker, and as a message related to the response 130, a voice "music 1 is played" may be output.

However, the message related to the response 130 is not limited to the above-described example. The message may include various kinds of information, and be output in various forms that may provide the information to a user, as well as in a voice. The action corresponding to the response 130 is not limited to the above-described example, and may include various operations related to the response 130.

A user input having the same intention as that of a user input previously input may be input to the electronic device 1000. In this case, a user may expect that the same response as a previous response will be output. However, according to an embodiment of the disclosure, the current response 130 may be different from the previous response, although the current response 130 is a response with respect to a user input having the same intention as that with respect to the previous response. For example, the at least one module 120 for processing a user input may operate differently from a module operated according to a previous user input, due to various causes, and accordingly, the current response 130 that is different from the previous response may be output.

Accordingly, when the current response 130 that is different from the previous response is output, the user may question why his/her intended response is not output. The user may question what to do to output his/her intended response.

The electronic device 1000 according to an embodiment of the disclosure may have obtained necessary information in advance to understand a user question described above and answer the user question, and answer the user question using the obtained information, thereby providing the user with information about a reason why the current response 130 has changed. The electronic device 1000 may identify the user's desired response, and guide the user to make a user input for outputting the user's desired response.

The electronic device 1000 according to an embodiment of the disclosure may identify a module operated differently from the module operated according to the previous user input having the same intention as that of the current user input 110, from among the at least one module 120 operated according to the current user input 110, and obtain information about a reason why the current response 130 has changed, based on the identified module, in operation 140.

According to an embodiment of the disclosure, when an operation of the at least one module 120 operated according to the current user input 110 changes, the current response 130 may become different from the previous response. For example, when an AI model or an engine used in each module is updated, the module may operate differently from an operation for the previous response although the module receives the same input information, thereby outputting different output information. Accordingly, the information about the reason why the current response 130 has changed, according to an embodiment of the disclosure, may be obtained based on the module identified as a changed module, through a comparison with information about a module operated according to a previous user input, stored in a response history 150, among the at least one module 120 operated according to the current user input 110.

The information about the reason why the current response 130 has changed, according to an embodiment of the disclosure, may be obtained by inferring information about a change cause that may correspond to a change of the identified module. The electronic device 1000 according to an embodiment of the disclosure may provide the inferred information to the user, and accordingly, the user may determine a cause by which the current response 130 has changed. The electronic device 1000 may determine the user's desired response based on the inferred information, and guide the user to make a user input for outputting the determined response.

The electronic device 1000 according to an embodiment of the disclosure may compare information processed by at least one module operated according to a previous user input having the same intention as the user input 110 with respect to the current response 130, among information stored in advance as the response history 150, with information processed by the at least one module 120 operated according to the current user input 110. For example, information processed by each module may include information input/output to/from the module when the module operates. According to an embodiment of the disclosure, when a module has changed, the module may output different output information with respect to the same input information. Therefore, by comparing pieces of output information, a changed module may be identified. However, by comparing various kinds of information about at least one module, as well as the input/output information described above, with respect to the current response 130 and the previous response, a changed module with respect to the current response 130 may be identified.

Therefore, according to an embodiment of the disclosure, information about a reason why the current response 130 has changed from the previous response with respect to the user input 110 having the same intention as that with respect to the previous response may be obtained based on the information of the response history 150.

The response history 150 according to an embodiment of the disclosure may include information about a history of responses output from the electronic device 1000 according to user inputs previously received by the electronic device 1000. Whenever a new response with respect to the user input 110 is output from the electronic device 1000, information about the new response may be added to the response history 150 according to an embodiment of the disclosure, and the resultant response history 150 may be stored in a memory of the electronic device 1000. However, the response history 150 may be stored in an external device (not shown) or a server (not shown), instead of the electronic device 1000. The response history 150 according to an embodiment of the disclosure may include information about a history of responses output by the same user from an external device (not shown), in addition to responses output from the electronic device 1000.

Information stored in advance as the response history 150 according to an embodiment of the disclosure may include information about at least one module used to output each response. The information about the at least one module, according to an embodiment of the disclosure, may include input/output information of each module.

The input/output information of each module according to an embodiment of the disclosure may include information input/output to/from the module when the module operates. A comparison between modules with respect to the current user input 110 and the previous user input may be performed based on a comparison of input/output information of the modules.

According to an embodiment of the disclosure, a module that receives the same input information as that input to the other modules and outputs different output information from that output from the other modules may be identified as a changed module. According to an embodiment of the disclosure, when modules receive different input information, or when modules receive the same input information and output the same output information, no changed module may be identified.

For example, when input information of the current user input 110 with respect to an ASR module is identical to input information of a previous user input with respect to the ASR module, and output information corresponding to the current user input 110 with respect to the ASR module is identical to output information corresponding to the previous user input with respect to the ASR module, the ASR module used for the current user input 110 may be determined not to be a changed module. When input information of the current user input 110 with respect to a DC module among the module 120 is different from input information of a previous user input with respect to the DC module, the DC module used for the current user input 110 may be determined not to be a changed module, without making any determination on output information of the DC module.

When input information of the current user input 110 with respect to a DD module among the module 120 is identical to input information of a previous user input with respect to the DD module, and output information corresponding to the current user input 110 with respect to the DD module is different from output information corresponding to the previous user input with respect to the DD module, the DD module used for the current user input 110 may be identified as a changed module. Accordingly, the information about the reason why the current response 130 has changed may be obtained based on the DD module identified as the changed module, in operation 140.

According to an embodiment of the disclosure, information (for example, input/output information) about a module operated according to a previous user input corresponding to each of the module 120 may be identified, based on input information of the module 120 operated according to the current user input 110. When a user input having the same intention as that of a previous user input is received, information about a module with respect to a previous response corresponding to each module may be identified according to input information, in consideration that the same input information may be received by the same module. In this case, information about a module operated according to the previous user input, stored in the response history 150, may include input/output information of the module, without including identification information of the module. For example, by searching input information having the same hash value as that converted from input information of each module 120 in the response history 150, information about a module operated according to the previous user input corresponding to the module 120 may be identified.

However, the information about the module operated according to the previous user input, stored in the response history 150, is not limited to the above-described example, and may include identification information about each module 120, and the information about the module operated according to the previous user input corresponding to each module 120 may be identified, based on the identification information about each module 120. Identification information of a module, according to an embodiment of the disclosure, may include information representing what module each module is, and may be used to identify information about at least one module operated according to a previous user input corresponding to the at least one module 120 operated according to the current user input 110, in operation 140.

For example, information processed in a DD module among the module 120 operated according to the current user input 110 may be compared with information processed in the DD module among the module operated according to the previous user input, and information about a reason why a response has changed may be obtained based on a result of the comparing, in operation 140. According to an embodiment of the disclosure, a module of which processed information is to be compared with respect to a current user input and a previous user input is not limited to a DD module, and other modules (for example, an ASR module, a DC module, a NLU module, a DM module, a NLG module, etc.) used to process user inputs may also be compared with respect to a current user input and a previous user input. Information about a reason why a response has changed may be obtained based on a result of the comparing, in operation 140.

A comparison with information about a module operated according to the previous user input for identifying a changed module from among the module 120 operated according to the current user input 110, according to an embodiment of the disclosure, may be performed in order according to priority of the at least one module 120.

Priority according to an embodiment of the disclosure may be determined in order of modules with higher probabilities to be identified as a changed module. For example, priority may be determined according to the order in which an engine or AI model used in each module 120 is updated or changed. For example, a module using a last updated AI model may be determined to have highest priority. Accordingly, by comparing modules according to priority, according to an embodiment of the disclosure, a changed module among the module 120 operated according to the current user input 110 may be quickly identified.

Priority according to an embodiment of the disclosure may be determined, based on a difference between the previous response and the current response 130, stored in the response history 150. For example, when a current response 130 includes an action by a TV and a previous response includes an action by an AI speaker, priority of a module may be determined based on existence of a difference between selected devices. For example, a DD module capable of selecting a device may be determined to have highest priority.

However, a determination on priority is not limited to the above-described example, and priority may be determined according to various criteria.

According to an embodiment of the disclosure, the at least one module 120 may be compared according to the order in which the at least one module 120 is executed to process the user input 110, regardless of priority.

However, a comparison operation is not limited to the above-described example, and may be performed on the at least one module 120 according to various orders.

Information about a reason why the current response 130 has changed, according to an embodiment of the disclosure, may be obtained by inferring a reason by which the current response 130 has changed, based on the module 120 operated according to the current user input 110 and identified as a changed module.

For example, a case in which, with respect to a user input "play music 1", a previous response stored in the response history 150 is that music 1 is output from a TV, whereas the current response 130 is that music 1 is output from an AI speaker, is assumed.

According to an embodiment of the disclosure, a changed module among the at least one module 120 operated according to the current user input 110 may be identified through a comparison with input/output information of modules operated according to the previous user input. For example, in the case in which input information of a DD module among the module 120 operated according to the current user input 110 is identical to input information of the DD module operated according to the previous user input and output information of the DD module is different from output information of the response history 150, the DD module among the module 120 operated according to the current user input 110 may be identified as a changed module. For example, according to a selection of an AI speaker, instead of a TV, by the DD module, output information that is different from previous output information may be output although the same input information is input.

According to an embodiment of the disclosure, a reason why the DD module has changed may be inferred based on the changed module, and accordingly, information about a reason why the current response 130 has changed, the information including the inferred reason, may be obtained. For example, at least one candidate reason (for example, a reason that an AI speaker newly appears in a surrounding environment differently from in a previous response or a reason that an AI speaker is more often used than a TV) that may correspond to a case in which output information of the DD module changes from information corresponding to a TV to information corresponding to an AI speaker may be inferred. According to an embodiment of the disclosure, a reason why the current response 130 has changed from the previous response may be inferred, based on a probability for each candidate reason.

Inference according to an embodiment of the disclosure may be performed by an AI model trained in advance to infer a reason why a current response has changed based on information about a changed module. The AI model according to an embodiment of the disclosure may be updated continuously based on information about a user's state or a surrounding environment changing in real time, such that a reason why a current response has changed, suitable for the user's current situation, is inferred.

The inference may be performed by database (for example, knowledge base (KB) or database (DB)) in which various changed examples of modules of processing user inputs and causes respectively corresponding to the changed examples have been stored in advance. The database according to an embodiment of the disclosure may be updated continuously such that a reason is appropriately inferred according to information about a user's state or a surrounding environment changing in real time.

However, the inference is not limited to the above-described example, and the inference according to an embodiment of the disclosure may be performed according to various methods based on various data.

By performing inference based on database, according to an embodiment of the disclosure, several times in stages according to the corresponding information, information about a reason why the current response 130 has changed may be obtained. For example, that output information of a DD module has changed from a TV to an AI speaker may derive inference that the AI speaker is currently in an available state, differently from in a previous response. For example, that the AI speaker is in the available state may derive inference that the AI speaker has been newly placed in a user's surrounding environment. Information about a reason why the current response 130 has changed may include information representing that the AI speaker has been newly placed in the user's surrounding environment and accordingly, the current response 130 has changed, which is finally inferred information. According to an embodiment of the disclosure, information about a current state in which the AI speaker has been placed in the user's surrounding environment may be continuously updated and stored in the database. Therefore, inference being suitable for the user's current situation may be performed.

The electronic device 1000 according to an embodiment of the disclosure may provide the user with the information about the reason why the current response 130 has changed, obtained in operation 140, according to a request from the user, in operation 160.

For example, the electronic device 1000 may provide the user with information about a reason why the current response 130 has changed, in operation 160, by understanding a user inquiry related to the reason why the current response 130 has changed, which may be received later, based on the information about the reason why the current response 130 has changed, obtained in operation 140, and outputting a response message.

Accordingly, the electronic device 1000 according to an embodiment of the disclosure may have established necessary data in advance, based on the information about the reason why the current response 130 has changed, obtained in operation 140, to understand a user inquiry and output a response message. For example, the electronic device 1000 may have updated AI models which are used to understand the user input 110 and generate a response message, in advance, based on the information about the reason why the current response 130 has changed.

When the information about the reason why the current response 130 has changed, obtained in operation 140, includes information representing that the current response 130 has changed due to an AI speaker newly placed in the user's surrounding environment, the electronic device 1000 may have updated an AI model (for example, a NLU model) which is used to understand a user inquiry, in advance, based on the information about the reason why the current response 130 has changed, to understand a user inquiry inquiring about a reason why the current response 130 is different from the previous response.

The electronic device 1000 may have updated an AI model (for example, a DM model) which is used to generate a response message for a user, in advance, to generate and output, as a response message for the user inquiry, information representing that the current response 130 has changed due to an AI speaker newly placed in the user's surrounding environment.

However, a method of providing the user with information about a reason why the current response 130 has changed is not limited to the above-described example, and the electronic device 1000 may provide the user with information about a reason why the current response 130 has changed in various forms, according to various methods.

Therefore, according to an embodiment of the disclosure, the user may receive the information about the reason why the current response 130 has changed from the electronic device 1000, thereby understanding a reason why the current response 130 which is different from the previous response has been output.

According to an embodiment of the disclosure, operations which may be performed by the electronic device 1000 may be performed by a server (not shown). For example, the server (not shown) may process at least one module 120 based on the user input 110 received from the electronic device 1000 to generate the current response 130, and transmit information about the current response 130 to the electronic device 1000. The server (not shown) may obtain information about a reason why the current response 130 has changed, based on the response history 150, and provide the information about the reason why the current response 130 has changed, to the electronic device 1000. The electronic device 1000 according to an embodiment of the disclosure may provide the information about the reason why the current response 130 has changed, received from the server (not shown), to the user.

The server (not shown) according to an embodiment of the disclosure may be implemented as at least one computer device. The server (not shown) may, for example, and without limitation, be distributed in the form of a cloud, and provide a command, a code, a file, content, etc.

FIG. 2 is a block diagram illustrating an example configuration of the electronic device 1000 according to various embodiments.

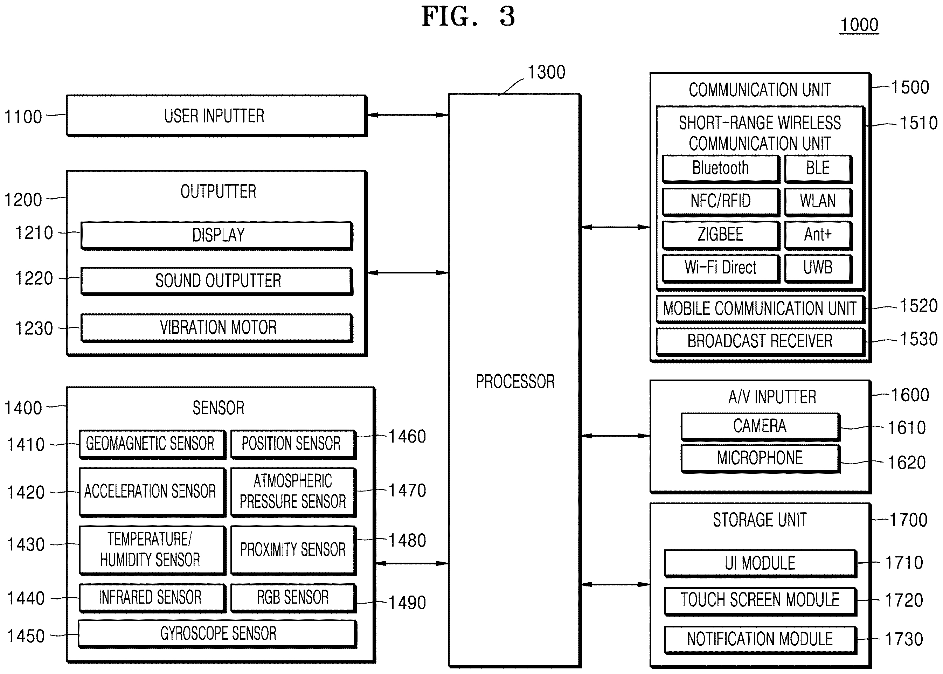

FIG. 3 is a block diagram illustrating an example configuration of the electronic device 1000 according to various embodiments.

Referring to FIG. 2, the electronic device 1000 may include a processor (e.g., including processing circuitry) 1300, a user inputter (e.g., including input circuitry) 1100, and an outputter (e.g., including output circuitry)_1200. However, the components shown in FIG. 2 are not essential components of the electronic device 1000. The electronic device 1000 may be implemented with more or less components than those shown in FIG. 2.

For example, as shown in FIG. 3, the electronic device 1000 according to an embodiment of the disclosure may further include a sensor 1400, a communication unit (e.g., including communication circuitry) 1500, an Audio/Video (A/V) inputter (e.g., including A/V input circuitry) 1600, and a memory (e.g., storage unit) 1700, in addition to the processor 1300, the user inputter 1100, and the outputter 1200.

The user inputter 1100 may be a device including various input circuitry configured to enable a user to input data for controlling the electronic device 1000. For example, the user inputter 1100 may include, for example, a key pad, a dome switch, a touch pad (a capacitive type, a resistive type, an infrared beam type, a surface acoustic wave type, an integral strain gauge type, a piezo effect type, etc.), a jog wheel, a jog switch, etc., although not limited thereto.

According to an embodiment of the disclosure, the user inputter 1100 may receive a user input required to request a response from the electronic device 1000. When user inputs according to an embodiment of the disclosure include a voice input and a gesture input, the user inputter 110 may receive a voice input and a gesture input from a user, respectively, through, for example, a microphone 1620 and a camera 1610. However, the user inputter 1100 is not limited to the above-described example, and may receive various forms of user inputs through various devices.

The outputter 1200 may include various output circuitry and output an audio signal, a video signal, or a vibration signal, and the outputter 1200 may include, for example, and without limitation, a display 1210, a sound outputter 1220, and a vibration motor 1230. The outputtter 1200 according to an embodiment of the disclosure may output a first response by processing at least one module according to a first user input. The outputter 1200 may output information about a reason why a first response has changed from a second response previously output, according to a second user input having the same intention as that of the first user input.

The display 1210 may display and output information that is processed in the electronic device 1000. According to an embodiment of the disclosure, the display 1210 may output information about a reason why a response output according to a user input has changed.

When the display 1210 includes a touch pad forming a layer structure to be configured as a touch screen, the display 1210 may be used as an input device, as well as an output device. The display 1210 may include, for example, and without limitation, at least one of a liquid crystal display (LCD), a thin film transistor-liquid crystal display (TFT-LCD), an organic light-emitting diode (OLED) display, a flexible display, a 3dimensional (3D) display, an electrophoretic display, or the like. The electronic device 1000 may include two or more displays 1210 according to its implementation type.

The sound outputter 1220 may include various output circuitry and output audio data received from the communication unit 1500 or stored in the memory 1700. The sound outputter 1220 may include, for example, a speaker.

The vibration motor 1230 may output a vibration signal. Also, the vibration motor 1230 may output a vibration signal according to a touch input to the touch screen. According to an embodiment of the disclosure, the sound outputter 1220 and the vibration motor 1230 may output information about a reason why a response output according to a user input has changed.

The processor 1300 may include various processing circuitry and control overall operations of the electronic device 1000. For example, the processor 1300 may execute programs stored in the memory 1700 to control overall operations of the user inputter 1100, the outputter 1200, the sensor 1400, the communication unit 1500, the A/V inputter 1600, etc.

The electronic device 1000 may include at least one processor 1300. For example, the electronic device 1000 may include various kinds of processors, such as, for example, and without limitation, a dedicated processor, a central processing unit (CPU), a graphics processing unit (GPU), a neural processing unit (NPU), etc.

The processor 1300 may process a command of a computer program by performing basic arithmetic operations, logic operations, and input/output operations. The command may be provided from the memory 1700 to the processor 1300, or the command may be received through the communication unit 1500 and provided to the processor 1300. For example, the processor 1300 may be configured to execute a command according to a program code stored in a recording device such as a memory.

The processor 1300 according to an embodiment of the disclosure may provide, when a response output according to a user input has changed, information about a reason why the response has changed with respect to the response, to a user. The processor 1300 according to an embodiment of the disclosure may obtain information about a reason why a response has changed, based on history information of a second response which is a response output previously according to a previous second response having the same intention as that of a first user input for a first response output currently. The second response according to an embodiment of the disclosure may be a response output previously according to the previous second user input having the same intention as that of the first user input among previously output responses. According to an embodiment of the disclosure, a module operated differently from at least one module operated according to the second user input may be identified from among at least one module operated according to the first user input, based on the history information of the second response, and information about which a response has changed may be obtained based on the identified module.

The processor 1300 according to an embodiment of the disclosure may match the at least one module operated according to the first user input with the at least one module operated according to the second user input, and identify a changed module based on results of comparisons between pieces of information processed in the matched modules. For example, a module operated according to the first user input may match with a module operated according to the second user input, according to whether they perform the same function and processing. For example, an ASR module performing voice recognition according to a first user input may match with an ASR module which performs the same processing as that of the ASR module according to a second user input and performs voice recognition.

The processor 1300 according to an embodiment of the disclosure may obtain input/output information of a first module among at least one module operated according to a first user input, and identify information about a first' module matching with the first module among at least one module operated according to a second user input, based on the input information of the first module. The first module and the first' module according to an embodiment of the disclosure may be modules having a difference, due to various causes, such as updates or corrections of AI models or engines of the modules, although the modules perform the same processing.

For example, information about a module with respect to a second response having the same input information as that of the first module may be identified as information about the first' module. Also, information about a module operated according to a second user input including the same hash value as a hash value obtained by converting the input information of the first module may be identified as information about the first' module. When output information of the first module is different from output information of the first' module, the processor 1300 may identify the first module as a changed module.

The processor 1300 according to an embodiment of the disclosure may determine priority for the at least one module operated according to the first user input, and compare information processed in the at least one module operated according to the first user input with information processed in the at least one module operated according to the second user input, sequentially, according to the determined priority. The processor 1300 may identify a changed module with respect to the first response, based on a result of the comparing.

The processor 1300 according to an embodiment of the disclosure may infer a reason why the first response is different from the second response, based on the changed module, generate information about a reason why the first response has changed, the information including the inferred reason, and provide the information to a user.

The processor 1300 according to an embodiment of the disclosure may have trained an AI model in advance, to generate a response including the information about the reason why the first response has changed, with respect to a user inquiry related to a change of the first response. For example, the processor 1300 may have trained at least one AI model that is used to generate a response to a user input, in advance, based on the changed module. The processor 1300 may output a response including the information about the reason why the first response has changed, according to reception of a user input including an inquiry related to a change of the first response, based on the AI model trained in advance, thereby providing the user with the information about the reason why the first response has changed.

The sensor 1400 may include various sensors and sense a state of the electronic device 1000 or a surrounding state of the electronic device 100, and transfer information about the sensed state to the processor 1300.

The sensor 1400 may include, for example, at least one among a geomagnetic sensor 1410, an acceleration sensor 1420, a temperature/humidity sensor 1430, an infrared sensor 1440, a gyroscope sensor 1450, a position sensor (for example, a global positioning system (GPS)) 1460, an atmospheric pressure sensor 1470, a proximity sensor 1480, or a RGB sensor (illuminance sensor) 1490, although not limited thereto.

The sensor 1400 according to an embodiment of the disclosure may sense data required to provide information about a reason why a response has changed. For example, the sensor 1400 may sense various information about a user, which may be used to determine an intention of a user input.

The communication unit 1500 may include one or more components, each including various communication circuitry, to enable the electronic device 1000 to communicate with a server 2000 or an external device (not shown). For example, the communication unit 1500 may include a short-range wireless communication unit 1510, a mobile communication unit 1520, and a broadcast receiver 1530.

The short-range wireless communication unit 1510 may include various communication units, each including various communication circuitry, such as, for example, a Bluetooth communication unit, a Bluetooth low energy (BLE) communication unit, a near field communication (NFC) unit, a wireless local area network (WLAN) communication unit, a Zigbee communication unit, an infrared data association (IrDA) communication unit (not shown), a Wi-Fi Direct (WFD) communication unit, an ultra wideband (UWB) communication unit, an Ant+ communication unit, and the like, although not limited thereto.

The mobile communication unit 1520 may include various communication circuitry and transmit/receive a wireless signal to/from at least one of a base station, an external terminal, or a server on a mobile communication network. The wireless signal may include a voice call signal, a video call signal or various formats of data according to transmission/reception of text/multimedia messages.

The broadcast receiver 1530 may include various circuitry and receive broadcasting signals and/or broadcasting-related information from outside through a broadcast channel. The broadcast channel may include a satellite channel and a terrestrial channel. According to implementation examples, the electronic device 1000 may not include the broadcast receiver 1530.

According to an embodiment of the disclosure, the communicator 1500 may transmit/receive data required to provide information about a reason why a response has changed.

The A/V inputter 1600 may include various A/V input circuitry and be used for input of an audio signal or a video signal, and may include, for example, and without limitation, a camera 1610 and a microphone 1620. The camera 1610 may obtain an image frame, such as a still image or a moving image, through an image sensor in a video call mode or a photographing mode. An image captured by the image sensor may be processed by the processor 1300 or a separate image processor (not shown). For example, the camera 1610 may be used to receive a user gesture input.

The microphone 1620 may receive a sound signal from the outside and process the sound signal into electrical voice data. For example, the microphone 1620 may be used to receive a user voice input.

The memory 1700 may store programs for processing and control of the processor 1300, and store data input to the electronic device 1000 or to be output from the electronic device 1000.

The memory 1700 according to an embodiment of the disclosure may store data required to provide information about a reason why a response has changed. For example, the memory 1700 may store history information about various responses output from the electronic device 1000.

The memory 1700 may include at least one type of storage medium among a flash memory type, a hard disk type, a multimedia card micro type, a card type memory (for example, secure digital (SD) or extreme digital (XD) memory), random access memory (RAM), static random access memory (SRAM), read only memory (ROM), electrically erasable programmable read-only memory (EEPROM), programmable read-only Memory (PROM), a magnetic memory, a magnetic disk, or an optical disk.

The programs stored in the memory 1700 may be classified into a plurality of modules according to their functions, and for example, the programs may be classified into a UI module 1710, a touch screen module 1720, a notification module 1730, etc.

The UI module 1710 may provide a specialized user interface (UI) or graphic user interface (GUI) interworking with the electronic device 1000 for each application. The touch screen module 1720 may sense a user touch gesture made on a touch screen, and transfer information about the user touch gesture to the processor 1300. The touch screen module 1720 according to some embodiments of the disclosure may recognize and analyze a touch code. The touch screen module 1720 may be configured with separate hardware including a controller.

Various sensors may be installed inside or around the touch screen to sense a touch or proximity touch made on the touch screen. An example of a sensor for sensing a touch made on the touch screen is a tactile sensor. The tactile sensor may be a sensor for sensing a contact of a specific object, which may be felt by a human. The tactile sensor may sense various information, such as roughness of a contact surface, stiffness of a contact object, temperature of a contact point, etc.

The user touch gesture may include, for example, and without limitation, tap, touch & hold, double tap, drag, panning, flick, drag & drop, swipe, etc.

The notification module 1730 may generate a signal for informing event occurrence of the electronic device 1000.

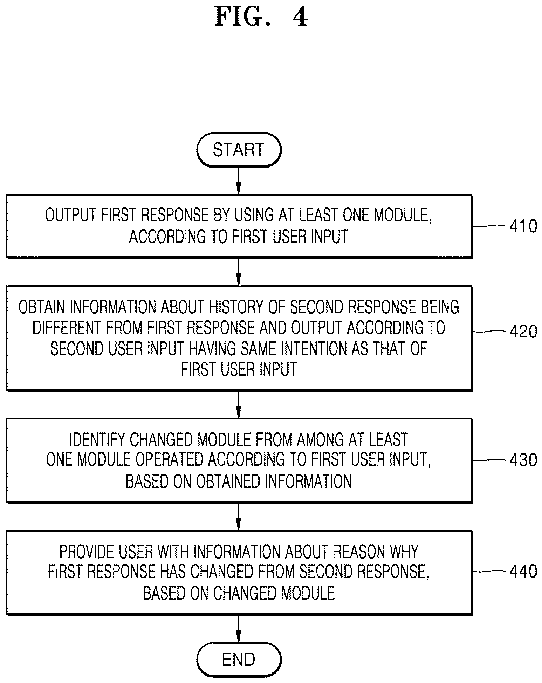

FIG. 4 is a flowchart illustrating an example method of providing information about a reason why a response has changed, according to various embodiments.

Referring to FIG. 4, in operation 410, the electronic device 1000 according to an embodiment of the disclosure may output a first response using at least one module, according to a first user input.

For example, the electronic device 1000 may output a response corresponding to a user input using a module (for example, an ASR module) of performing voice recognition on a user voice input according to reception of the user voice input, a module (for example, a DD module) of selecting a device from which a response will be output based on a result of the voice recognition, a module (for example, a NLU module) of understanding the user voice input based on the selected device, a module (for example, a NLG module) of generating a response based on a result of the understanding, etc. However, modules that are used by the electronic device 1000 are not limited to the above-mentioned modules, and the electronic device 1000 may output a response using various modules for processing user inputs.

In operation 420, the electronic device 1000 may obtain information about a history of a second response being different from a first response and output according to a second user input having the same intention as that of a first user input.

According to an embodiment of the disclosure, history information of responses may include input/output information of individual modules. However, history information (hereinafter, also referred to as response history information) of responses is not limited to the above-described examples, and may include various kinds of information related to responses.

The electronic device 1000 according to an embodiment of the disclosure may identify an intention of the first user input. Also, the electronic device 1000 may identify an intention of a user input corresponding to each response, included in response history information stored in advance.

For example, when a user input is a voice input, an intention may be identified based on output information of a module (for example, a NLU module) of understanding voice inputs. An intention for a user input may be identified based on an AI model trained in advance to extract a feature of a user input and obtain an intention. However, a method of identifying an intention for a user input is not limited to the above-described example, and an intention of a first user input and an intention of a user input included in pre-stored response history information may be identified according to various methods.

The electronic device 1000 according to an embodiment of the disclosure may identify, as a second user input, at least one user input which has an intention being identical or similar to an intention of a first user input and according to which a response being different from a first response is output, based on information (for example, input information of an initial module (for example, an ASR module) that has processed a user input) corresponding to a user input among input/output information of each module, included in response history information.

For example, a second response corresponding to the second user input may include a message that is different from a message of the first response or an action that is different from an action of the first response. Therefore, according to an embodiment of the disclosure, a user input according to which a response is identical to a first response may be not identified as a second user input, although the user input has an intention that is identical or similar to that of a first user input. In response history information according to an embodiment of the disclosure, a second response corresponding to a second user input may be identified based on output information of a last module (for example, a NLG module) that has processed the second user input among input/output information of individual modules corresponding to the second user input.

However, a second user input and a second response, stored as response history information, are not limited to the above-described example, and the second user input and the second response may be identified according to various methods.

In operation 430, the electronic device 1000 according to an embodiment of the disclosure may identify a changed module operated differently from a module operated according to the second user input from among at least one module operated according to the first user input, based on the information about the history about outputs of the second response, obtained in operation 420.

The electronic device 1000 according to an embodiment of the disclosure may compare input/output information of at least one module operated according to the first user input, with input/output information of at least one module operated according to the second user input, in the history information of the second response, thereby identifying a changed module with respect to the first response. According to an embodiment of the disclosure, the output information may be compared between the corresponding modules.

According to an embodiment of the disclosure, information about modules operated according to the first user input and the second user input may correspond to each other, according to whether input information of the individual modules is the same or according to identification information of the individual modules.

For example, information about the first' module matching with the first module among information about modules operated according to the second user input may be identified based on input information of the first module among modules operated according to the first user input, and when output information of the first module is different from output information of the first' module, the first module may be determined to be a changed module.

The input information of the first module according to an embodiment of the disclosure may, for example, be converted into a hash value, and accordingly, information about the first' module may be identified. According to an embodiment of the disclosure, information including the same hash value as the converted hash value among information about modules corresponding to the second response may be identified as information about the first' module.

According to an embodiment of the disclosure, the modules may be compared sequentially according to priority assigned to the modules. However, the modules may be compared according to various orders.

According to an embodiment, a module having different output information from the other modules while having the same input information as the other modules may be identified as a changed module. According to an embodiment of the disclosure, when modules have different input information, or when modules have the same input information and the same output information, no changed module may be identified. However, a method of identifying a changed module is not limited to the above-described example, and a changed module may be identified from among modules used according to the first response according to various methods.

In operation 440, the electronic device 1000 according to an embodiment of the disclosure may provide the user with information about a reason why the first response has changed from the second response, based on the changed module identified in operation 430.

According to an embodiment of the disclosure, a reason why a changed module with respect to the first response has changed differently from a module with respect to the second response may be inferred, and information about a reason why the first response has changed from the second response may be provided to the user, according to a result of the inferring.

The electronic device 1000 according to an embodiment of the disclosure may have trained at least one AI model that is used to understand a user input or generate a response, in advance, based on the result of the inferring, such that the electronic device 1000 recognizes an inquiry related to the change of the first response and generates an appropriate response to the inquiry. According to an embodiment of the disclosure, an AI model for understanding an inquiry or generating a response based on information related to a change of a first response may need to be trained in advance to understand a user input including an inquiry related to the change of the first response and generate an appropriate response to the inquiry. Therefore, the electronic device 1000 according to an embodiment of the disclosure may understand an inquiry related to a change of a first response, included in a user input, and generate a response to the inquiry, using the AI model trained in advance.

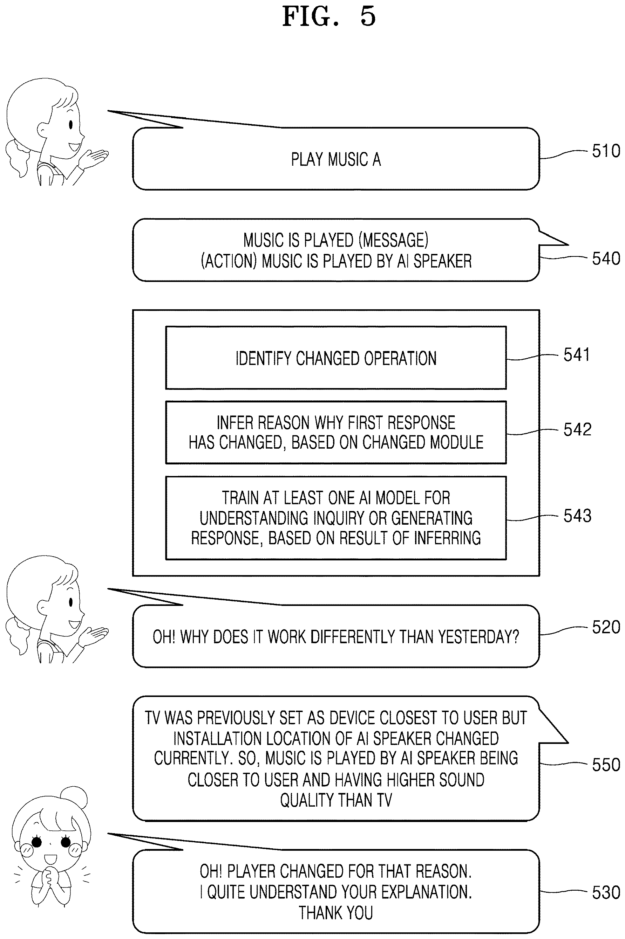

FIG. 5 is a diagram illustrating an example of providing information about a reason why a response has changed, according to various embodiments.

Referring to FIG. 5, the electronic device 1000 may receive a first user input 510 from a user. Also, the electronic device 1000 may output a first response 540 using at least one module according to the first user input 510. For example, in response to a first user input 510 including a voice "play music A", a first response 540 may be output by outputting a message including a voice "music is played" and an action of playing music A through an AI speaker.

The electronic device 1000 according to an embodiment of the disclosure may identify a changed module from among at least one module operated according to the first user input 510 by outputting the first response according to the first user input 510, in operation 541. The electronic device 1000 according to an embodiment of the disclosure may identify the changed module with respect to the first response by identifying a second user input having the same intention as that of the first user input 510 from pre-stored response history information and comparing information about at least one module operated according to the second user input with information about the at least one module operated according to the first user input.

For example, an intention of the first user input 510 including the voice 'play music A' may be determined to be "playing music A". At least one user input having the same intention as that of the first user input 510 and requesting "playing music A" may be identified from the response history information. A user input according to which a response (for example, an action of playing music A through a TV instead of the AI speaker) that is different from the first response 540 is output may be identified as a second user input from among the at least one identified user input.

In operation 542, the electronic device 1000 may infer a reason why the first response has changed, based on the changed module identified in operation 541. For example, when a DD module among the at least one module operated according to the first user input 510 is identified as a changed module, a reason why the first response has changed from the second response may be inferred, based on output information of the DD module.

For example, the output information of the DD module may be identified that the TV has changed to the AI speaker, in the first response, unlike in the second response, and a reason why the first response has changed may be inferred based on a result of the identifying. For example, a determination that the AI speaker is more suitable to play music than the TV because the AI speaker has moved to be located closer to a user than the TV and sound quality of the AI speaker is better than that of the TV may be inferred as a reason why the first response has changed.

In operation 543, the electronic device 1000 may train at least one AI model for understanding an inquiry included in a user input or generating a response, based on a result of the inferring. According to an embodiment of the disclosure, at least one AI model that is used to understand an inquiry or generate a response may need to be updated such that information about the changed first response is reflected to the at least one Al model. Thereby, it may be possible to understand a user inquiry about a reason why the first response has changed and generate a response to the inquiry, based on the at least one AI model.

According to an embodiment of the disclosure, after the first response 540 is output, a user input 520 including an inquiry about a reason why the first response 540 has changed may be additionally received. The electronic device 1000 may understand the user input 520 based on the at least one AI model trained in advance, generate a response 550 to the user input 520, and output the response 550.

For example, in response to the user input 520, the response 550 describing a reason that the first response 540 has been output through the AI speaker instead of the TV, according to a determination that when the first response 540 is output, the AI speaker is positioned at a location that is different from a location of the AI speaker when the second response has been output and the performance of the AI speaker is higher than that of the TV, may be provided to a user.

Accordingly, the user may have an understanding 530 of a reason why the first response 540 has changed from the second response, based on the response 550.

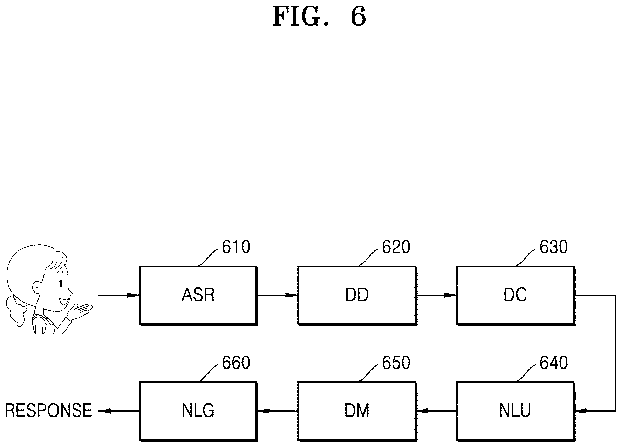

FIG. 6 is a diagram illustrating an example in which at least one module operates in response to a user voice input, according to various embodiments.

Referring to FIG. 6, a first voice input according to an embodiment of the disclosure may be processed using an ASR module 610, a DD module 620, a DC module 630, a NLU module 640, a DM module 650, and a NLG module 660 sequentially. By processing the first voice input, a first response may be output.

According to an embodiment of the disclosure, processing may be performed in an order of the ASR module 610, the DD module 620, the DC module 630, the NLU module 640, the DM module 650, and the NLG module 660, although not limited thereto. However, processing may be performed in various orders. For example, processing may be performed in an order of the ASR module 610, the DC module 630, the NLU module 640, the DM module 650, the DD module 620, and the NLG module 660. Also, processing may be performed in an order of the ASR module 610, the DC module 630, the DD module 620, the NLU module 640, the DM module 650, and the NLG module 660. Also, the DD module 620 may be combined with the DC module 630.

Hereinafter, an example in which processing is performed in the order of the ASR module 610, the DD module 620, the DC module 630, the NLU module 640, the DM module 650, and the NLG module 660 will be described.

According to an embodiment of the disclosure, based on information about a history of a second response output according to another second user input having the same intention as that of the first voice input from the user, a module operated differently from an operation of modules according to the second user input may be identified from among the ASR module 610, the DD module 620, the DC module 630, the NLU module 640, the DM module 650, and the NLG module 660 which have processed the first voice input. A reason why the first response is different from the second response may be inferred based on the module identified as a changed module.

According to an embodiment of the disclosure, the electronic device 1000 may provide, in response to a user inquiry received after the first response has been output and inquiring about a reason why the first response has changed, a user with a response to the user inquiry based on a result of the inferring.

According to an embodiment of the disclosure, when the electronic device 1000 determines that a user intention for a user input received after the first response has been output is a request for outputting the same response as the second response previously output, the electronic device 1000 may provide the user with a recommendation utterance according to which the same response as the second response may be output, based on a result of the inferred reason.

The ASR module 610 according to an embodiment of the disclosure may recognize a user voice input to obtain a text corresponding to the user voice input. For example, as a processed result of the ASR module 610 with respect to the user voice input, a voice 'play music A' may be obtained as a result of voice recognition.

According to an embodiment of the disclosure, by comparing input/output information of the ASR module 610 operated according to the first user input with input/output information of the ASR module 610 operated according to the second user input, a changed module may be identified from among the modules operated according to the first user input. For example, input information of the ASR module 610 operated according to the first user input may be compared with input information of the ASR module 610 operated according to the second user input. Also, output information of the ASR module 610 operated according to the first user input may be compared with output information of the ASR module 610 operated according to the second user input.

According to an embodiment of the disclosure, when the input information of the ASR module 610 operated according to the first user input is identical or similar to the input information of the ASR module 610 operated according to the second user input, while the output information of the ASR module 610 operated according to the first user input is different from the output information of the ASR module 610 operated according to the second user input, the ASR module 610 may be identified as a changed module. For example, when the same voice inputs are input to the ASR module 610 and different texts are output as results of processing by the ASR module 610, the ASR module 610 may be identified as a changed module.

According to an embodiment of the disclosure, a reason why the first response is different from the second response may be inferred, based on the ASR module 610, which is a changed module, operated according to the first user input and the second user input. For example, a reason that a voice recognition model used in the ASR module 610 has been updated may be inferred as a reason why the first response has changed. A reason why the ASR module 610 is identified as a changed module is not limited to the above-described example, and various causes may be inferred as a reason why the ASR module 610 is identified as a changed module.

According to an embodiment of the disclosure, the NLU module 640 may be updated based on the inferred reason, and thereby, the electronic device 1000 may understand a user inquiry received after the first response has been output and inquiring about a reason why the first response has changed, and output a response to the user inquiry. For example, an AI model having a question and answer (QA) domain that may be used to understand a user inquiry among domains of the NLU module 640 may be updated. An AI model to be updated is not limited to the above-mentioned example, and AI models that are used in various components (for example, the DD module 620, the DC module 630, the DM module 650, etc.) capable of being used to generate a response to a user inquiry inquiring about a reason which a first response has changed may be updated based on the inferred reason.

The electronic device 1000 according to an embodiment of the disclosure may output a response message representing that the first response has changed according to an updated voice recognition model, in response to a user inquiry inquiring about a reason why the first response has changed.

According to an embodiment of the disclosure, when the electronic device 1000 determines that a user intention for a user input received after the first response has been output is a request for outputting the same response as the second response, the electronic device 1000 may provide a user with a recommendation utterance according to which the same response as the second response may be output, based on the inferred reason. For example, a recommendation utterance according to which the same response as the second response may be output may be provided to the user.

The DD module 620 according to an embodiment of the disclosure may select a device that is to perform an action as a response, based on a text corresponding to a user voice input. For example, an AI speaker may be selected as a device that is to play music A by the DD module 620, based on a text corresponding to a voice input.

According to an embodiment of the disclosure, by comparing input/output information of the DD module 620 operated according to the first user input with input/output information of the DD module 620 operated according to the second user input, a changed module among modules with respect to the first response may be identified. For example, when the same texts are input to the DD module 620 and the DD module 620 selects different devices, the DD module 620 may be identified as a changed module.

According to an embodiment of the disclosure, a reason why the first response is different from the second response may be inferred, based on the DD module 620, which is a changed module, operated according to the first user input and the second user input. For example, whether an AI model used in the DD module 620 has changed, whether each device has moved, whether a device preferred by a user has changed, etc. may be inferred as a reason why the first response has changed.

The electronic device 1000 according to an embodiment of the disclosure may output, in response to a user inquiry inquiring about a reason why the first response has changed, a response message representing that the first response has changed according to various causes, such as a change of an AI model, a change in location of each device, a change of a device preferred by a user, etc.

According to an embodiment of the disclosure, when the electronic device 1000 determines that a user intention for a user input received after the first response has been output is a request for outputting the same response as the second response previously output, the electronic device 1000 may provide the user with a guide message for guiding a recommendation utterance according to which the same response as the second response may be output, based on a reason of the inferred reason. For example, a guide message for guiding a recommendation utterance may be provided for the user such that a user input requesting playing of music includes information about a device (for example, a TV) on which the music will be played.

The DC module 630 according to an embodiment of the disclosure may select a domain based on a device selected as a device that is to perform an action. According to an embodiment of the disclosure, a text corresponding to a user voice input may be understood in the NLU module 640, based on the selected domain. For example, when an AI speaker is selected by the DD module 620, the NLU module 640 may be executed based on an AI model that may understand a text in regard of the AI speaker. In this case, the DC module 630 may select a domain that is used to select an AI model for understanding the user voice input, such that one of modules that may be executed by the AI speaker is output as an action for a response.

According to an embodiment of the disclosure, by comparing input/output information of the DC module 630 operated according to the first user input with input/output information of the DC module 630 operated according to the second user input, a changed module among the modules operated according to the first user input may be identified. For example, when information about the same device that is to perform an action is input to the DC module 630 and the DC module 630 selects different domains, the DC module 630 may be identified as a changed module.

According to an embodiment of the disclosure, a reason why the first response is different from the second response may be inferred, based on the DC module 630, which is a changed module, operated according to the first user input and the second user input. For example, whether an AI model used to select a domain in the DC module 630 has changed, whether selectable domains have changed, etc. may be inferred as a reason why the first response has changed.

The electronic device 1000 according to an embodiment of the disclosure may output, in response to a user inquiry inquiring about a reason why the first response has changed, a response message representing that the first response has changed, according to various causes, such as a change of an Al model used to select a domain, a change of selectable domains, etc.

According to an embodiment of the disclosure, when the electronic device 1000 determines that a user intention for a user input received after the first response has been output is a request for outputting the same response as the second response previously output, the electronic device 1000 may provide the user with a recommendation utterance according to which the same response as the second response may be output, based on a reason why the DC module 630 has changed.

The NLU module 640 according to an embodiment of the disclosure may understand a text corresponding to the user voice input based on the selected domain. According to an embodiment of the disclosure, the NLU module 640 may be executed based on a plurality of AI models for understanding texts respectively existing for individual domains. For example, a user intention understood from a text may be determined by the NLU module 640. According to an embodiment of the disclosure, a response may be output according to the user intention determined by the NLU module 640.

According to an embodiment of the disclosure, by comparing input/output information of the NLU module 640 operated according to the first user input with input/output information of the NLU module 640 operated according to the second user input, a changed module among the modules with respect to the first response may be identified. For example, when the same selected domains are input to the NLU module 640 and the NLU module 640 outputs different understandings on the corresponding text, the NLU module 640 may be identified as a changed module.

According to an embodiment of the disclosure, a reason why the first response is different from the second response may be inferred based on the NLU module 640 operated according to the first user input and the second user input. For example, whether an AI model used to understand a text has changed in the NLU module 640 may be inferred as a reason why the first response has changed.

The electronic device 1000 according to an embodiment of the disclosure may output, in response to a user inquiry inquiring about a reason why the first response has changed, a response message representing that the first response has changed, according to various causes, such as a change of an AI model used to understand a text, etc.

According to an embodiment of the disclosure, when the electronic device 1000 determines that a user intention for a user input received after the first response has been output is a request for outputting the same response as the second response previously output, the electronic device 1000 may provide the user with a recommendation utterance according to which the same response as the second response may be output, based on a reason why the NLU module 640 has changed.

The DM module 650 according to an embodiment of the disclosure may generate an answer based on a result of an understanding on a text corresponding to a voice input. According to an embodiment of the disclosure, the DM module 650 may be executed based on an AI model for generating conversations. For example, answer information corresponding to a user input may be generated by the DM module 650, based on a user intention obtained based on a processed result of the NLU module 640.

According to an embodiment of the disclosure, by comparing input/output information of the DM module 650 operated according to the first user input with input/output information of the DM module 650 operated according to the second user input, a changed module among modules operated according to the first user input may be identified. For example, when user intentions for voice inputs input to the DM module 650 are the same and the DM module 650 outputs different pieces of answer information corresponding to the user inputs, the DM module 650 may be identified as a changed module.

According to an embodiment of the disclosure, a reason why the first response is different from the second response may be inferred, based on the DM module 650, which is a changed module, operated according to the first user input and the second user input. For example, whether an AI model used to generate answer information in the DM module 650 has changed may be inferred as a reason why the first response has changed.

The electronic device 1000 according to an embodiment of the disclosure may output, in response to a user inquiry inquiring about a reason why the first response has changed, a response message representing that the first response has changed, according to various causes, such as a change of an AI model used to generate answer information, etc.

According to an embodiment of the disclosure, when the electronic device 1000 determines that a user intention for a user input received after the first response has been output is a request for outputting the same response as the second response previously output, the electronic device 1000 may provide the user with a recommendation utterance according to which the same response as the second response may be output, based on a reason why the DM module 650 has changed.

The NLG module 660 according to an embodiment of the disclosure may generate a response message based on answer information obtained as a processed result of the DM module 650. According to an embodiment of the disclosure, the NLG module 660 may be processed based on an AI model for generating a response message, according to answer information. For example, a response message may be generated by generating a natural language based on answer information which is a processed result of the DM module 650.

According to an embodiment of the disclosure, by comparing input/output information of the NLG module 660 operated according to the first user input with input/output information of the NLG module 660 operated according to the second user input, a changed module among modules operated according to the first user input may be identified. For example, when the same answer information is input to the NLG module 660 and the NLG module 660 generates different response messages, the NLG module 660 may be identified as a changed module.

According to an embodiment of the disclosure, a reason why the first response is different from the second response may be inferred, based on the NLG module 660, which is a changed module, operated according to the first user input and the second user input. For example, whether an AI model used to generate a response message in the NLG module 660 has changed may be inferred as a reason why the first response has changed.

The electronic device 1000 according to an embodiment of the disclosure may output, in response to a user inquiry inquiring about a reason why the first response has changed, a response message representing that the first response has changed, according to various causes such as a change of an AI model used to generate a response message.

According to an embodiment of the disclosure, when the electronic device 1000 determines that a user intention for a user input received after the first response has been output is a request for outputting the same response as the second response previously output, the electronic device 1000 may provide the user with a recommendation utterance according to which the same response as the second response may be output, based on a reason why the NLG module 660 has changed.

However, according to an embodiment of the disclosure, when a processing order of the DD module 620 changes and the modules are processed in the order of the ASR module 610, the DC module 630, the NLU module 640, the DM module 650, the DD module 620, and the NLG module 660, the DD module 620 may be executed based on answer information output from the DM module 650. For example, the DD module 620 may select a device that is to perform an action, according to the answer information. The NLG module 660 may generate an appropriate response message for the device selected by the DD module 620, based on the answer information output from the DM module 650.

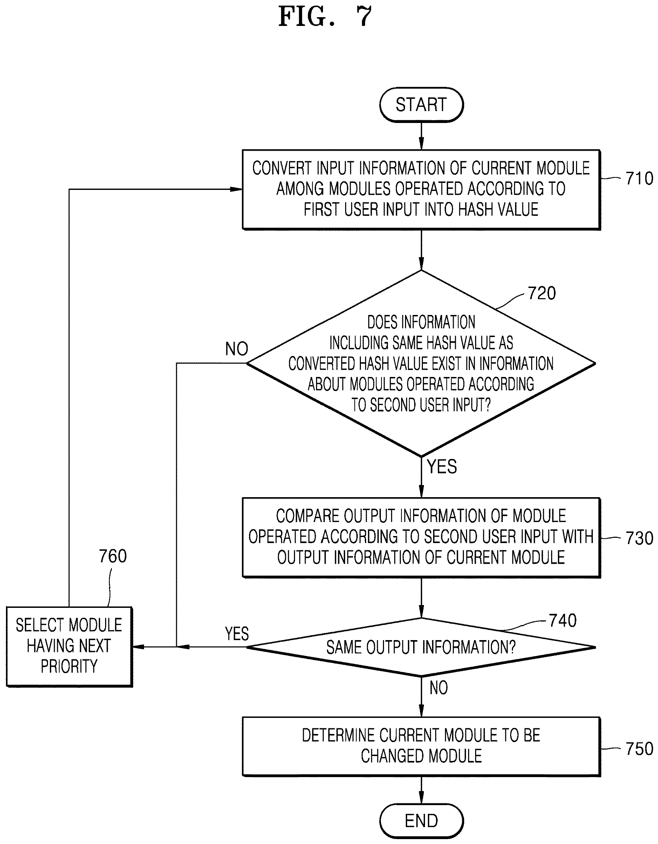

FIG. 7 is a flowchart illustrating an example method of identifying a changed module from among modules operated according to a first user input, according to various embodiments.

Referring to FIG. 7, in operation 710, the electronic device 1000 according to an embodiment of the disclosure may convert input information of a current module which is any one of modules operated according to a first user input, into a hash value. According to an embodiment of the disclosure, whether each module is a changed module may be determined according to priority. The electronic device 1000 according to an embodiment of the disclosure may determine whether a current module determined according to priority is a changed module, through a process performed after operation 720.

According to an embodiment of the disclosure, input information of the current module determined according to priority from among modules used to output a first response may be converted into a hash value. A hash value according to an embodiment of the disclosure may be a value converted into a form for more easily searching the same input information as input information. For example, the hash value may include only a number value, not information that may include both a letter and a number. However, the value into which the input information is converted is not limited to the above-described example, and the input information may be converted into another value instead of a hash value, and used to search a corresponding module in a previous response.

A second response according to an embodiment of the disclosure may be a response output according to a second user input which is a user input having the same intention as that of a user input with respect to the first response, and the second response may include an action or message that is different from that of the first response. According to an embodiment of the disclosure, a response output according to the second user input having the same intention as that of the user input with respect to the first response among a plurality of responses stored as a response history may be identified as a second response, and thereafter, operations following operation 710 may be performed based on the second response.

In operation 720, the electronic device 1000 according to an embodiment of the disclosure may determine whether information including the same hash value as the hash value converted in operation 710 exists in information about modules operated according to the second user input. The hash value according to an embodiment of the disclosure may be a value obtained by converting input information of each module.

Therefore, according to an embodiment of the disclosure, information about a module corresponding to the current module and operated according to the second user input may be identified based on a hash value of input information. Also, according to an embodiment of the disclosure, using a hash value, a comparison and determination may be more quickly performed, and an amount of computation that may be consumed to determine a changed module may be reduced.

Different information that is capable of being processed in modules according to an embodiment of the disclosure may be input to the respective modules according to engines or Al models used in the modules. Therefore, according to an embodiment of the disclosure, information about a model corresponding to the current module and operated according to the second user input may be identified from response history information, based on input information of each module, instead of identification information of each module. However, an operation of identifying information about a module corresponding to a current module and operated according to the second user input may be performed according to various methods, as well as a method of using input information. For example, a module corresponding to the current module and operated according to the second user input may be identified according to identification information of each module.

When information about a module, including the same hash value as the hash value converted in operation 710, does not exist in the information about the modules operated according to the second user input, in operation 720, a module having the next priority may be selected in operation 760. When information about a module, including the same hash value as the hash value of the current module and operated according to the second user input, does not include the same input information as the input information of the current module, a module having the next priority may be selected in operation 760. According to an embodiment of the disclosure, because information about a module may not have the same input value although including the same hash value, the information about the module may be searched in response history information using the hash value, and then a comparison between pieces of input information may be additionally performed.

According to an embodiment of the disclosure, when input information of a module is different from input information of a module operated according to a previous user input, the module may be determined not to be a changed module. For example, when an operation of at least one module (for example, an ASR module when a current module is a DD module) used to process a first user input earlier than the current module changes, no information about a module including the same input information as that of the current module and operated according to a second user input may exist.

Therefore, according to an embodiment of the disclosure, when no information about a module including the same input information as that of the current module and operated according to the second user input exists, the current module may be determined not to be a changed module, and accordingly, whether a module having the next priority, selected in operation 760, among modules operated according to a first user input is a changed module may be determined.

For example, when a current module has highest priority, a module having the second priority may be selected in operation 760, and input information of the selected module having the second priority may be converted into a hash value in operation 710. Then, in the following operations, whether the module having the second priority is a changed module may be determined.

However, because it is preferable that one of at least one module used to process a user input earlier than the current module is determined to be a changed module, whether at least one module used to process a user input earlier than the current module among modules having the next priority of that of the current module is a changed module may be first determined.

In operation 730, the electronic device 1000 according to an embodiment of the disclosure may compare output information of the module identified in operation 720 and operated according to the second user input with output information of the current module to determine whether the output information of the module is identical to the output information of the current module in operation 740.

When the output information of the module is identical to the output information of the current module, the current module may be determined not to be a changed module in operation 740, and accordingly, in operation 760, whether the module having the next priority is a changed module may be determined.

When the output information of the module is different from the output information of the current module in operation 740, the current module may be determined to be a changed module, in operation 750.

According to an embodiment of the disclosure, when a module changes, output information of the module may change, and the following module to be processed may be executed based on the changed output information. Therefore, both input information and output information of the following module may change. Therefore, according to an embodiment of the disclosure, operations 710 to 740 may be repeatedly performed until a changed module is determined, and, when a changed module is determined, the operations 710 to 740 for determining a changed module may terminate. A reason why the first response has changed may be inferred based on a result determined as a changed module, and a result of the inferring may be provided to a user.

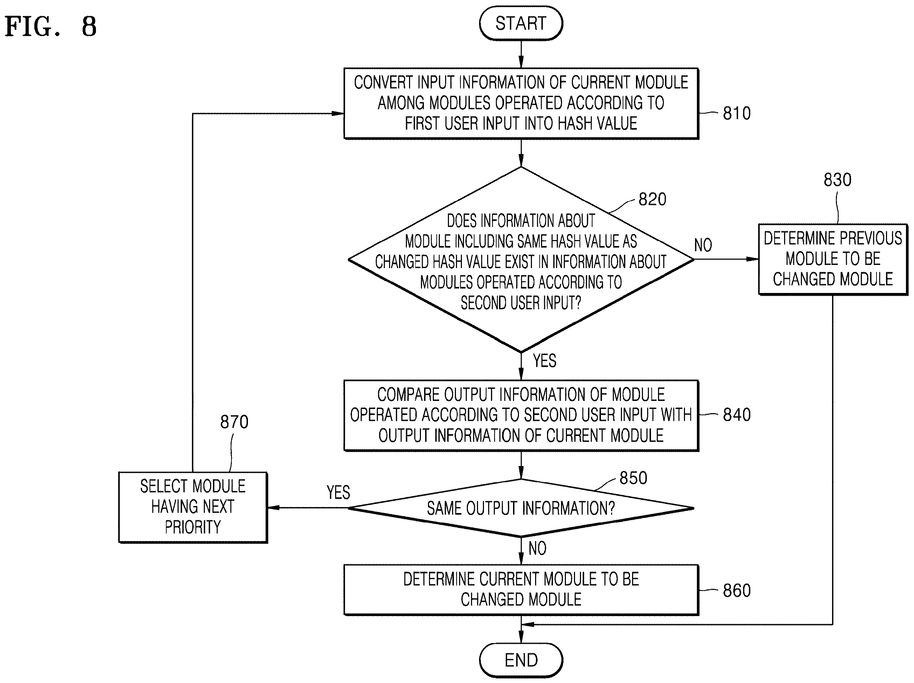

FIG. 8 is a flowchart illustrating an example method of identifying a changed module from among modules operated according to a first user input, according to various embodiments.

Referring to FIG. 8, in operation 810, the electronic device 1000 according to an embodiment of the disclosure may convert input information of a current module among modules operated according to the first user input into a hash value. In FIG. 8, a changed module may be determined according to an order in which a user input is processed, unlike operations of FIG. 7. For example, whether an ASR module in which a user voice input is first processed is a changed module may be first determined prior to the other modules.

In operation 820, the electronic device 1000 according to an embodiment of the disclosure may determine whether information about a module including the same hash value as the hash value changed in operation 810 exists in information about modules operated according to a second user input. Therefore, according to an embodiment of the disclosure, information about a module with respect to a second response, corresponding to the current module, may be identified from response history information, based on a hash value of input information.

When information about a module, including the same hash value as the hash value converted in operation 810, does not exist in the information about modules operated according to the second user input, a module (for example, an ASR module when the current module is a DD module) used to process the first user input earlier than the current module may be determined to be a changed module, in operation 830.

However, the module (hereinafter, referred to as a previous module) determined to be a changed module and used previously to process the first user input earlier than the current module may be a module determined not to be a changed module, before operations 810 and 820 are performed on the current module. For example, when no module operated according to the second user input and having the same input information as that of the current module exists although input/output information of the previous module is identical to that of the module operated according to the second user input and the previous module has been already determined not to be a changed module, it may be determined that input information of the current module has changed because an operation of the previous module processed earlier than the current module has changed. For example, a case in which output information of the previous module has changed due to various factors and then input to the current module, or a case in which output information of the previous module has been wrongly stored may correspond to the above-described case.

For example, when a hash value for input information of a DD module as a current module is obtained in operation 810 and no module having the same hash value exists among modules operated according to the second user input in operation 820, an ASR module which is the previous module may be determined to be a changed module.

As the changed module is determined according to an embodiment of the disclosure, an operation for determining a changed module may terminate, and a reason why the first response has changed may be inferred based on the changed module.

In operation 840, the electronic device 1000 according to an embodiment of the disclosure may compare output information of the module identified in operation 830 and operated according to the second user input with output information of the current module to determine whether the output information of the module is identical to the output information of the current module in operation 850.

When the electronic device 1000 determines that the output information of the module is identical to the output information of the current module in operation 850, the electronic device 1000 may determine that the current module is not a changed module, and determine whether a module having the next priority is a changed module, in operation 870. The module having the next priority according to an embodiment of the disclosure may be determined to be a module (for example, a DC module when the current module is a DD module) processed just after the current module has been processed, among modules used to process the first response.

When the electronic device 1000 determines that the output information of the module is different from the output information of the current module in operation 850, the electronic device 1000 may determine that the current module is a changed module, in operation 860.

According to an embodiment of the disclosure, by in advance obtaining, when a current response is output, a reason why the current response is different from a previous response to a user input having the same intention, and providing the reason for a user, the user may easily understand a reason why the current response has changed.

Machine-readable storage media may be provided in the form of non-transitory storage media. Herein, the 'non-transitory' storage media may refer, for example, to storage media that does not include a signal (e.g., an electromagnetic wave) and are tangible. For example, the 'non-transitory' storage media may include a buffer in which data is temporarily stored.

According to an embodiment of the disclosure, the methods according to various embodiments disclosed in the present disclosure may be included in a computer program product and provided. The computer program product may be traded as a product between a seller and a purchaser. For example, the computer program product may be distributed in the form of machine-readable storage media (for example, compact disc read only memory (CD-ROM)), or distributed (for example, downloaded or uploaded) online through an application store (for example, Google Play Store^{™}) or directly between two user equipments (for example, smart phones). In a case of the on-line distribution, at least a part of the computer program product may be temporarily stored or temporarily generated at least in machine-readable storage media, such as a memory of a server of a manufacturer, a server of an application store, or a relay server.

In the present disclosure, the term "portion", "part", or "unit" may be a hardware component such as a processor or a circuit, and/or a software component that is executed by a hardware component such as a processor.

It should be understood that the above descriptions of the disclosure are merely for illustrative purposes, and therefore, it will be apparent that those skilled in the art can readily make various modifications thereto without changing the technical spirit and essential features of the disclosure. Thus, it should be understood that the embodiments described above are merely for illustrative purposes and not for limitation purposes in all aspects. For example, each component described as a single type may be implemented in a distributed form, and likewise, components described in a distributed form may be implemented in a combined form.

The scope of the disclosure includes the appended claims and is not limited to the detailed description, and it is to be construed that the meaning and scope of the claims and all modifications or modified forms derived from the equivalent concept thereof are encompassed within the scope of the disclosure.

## Claims

1. A method of providing, by an electronic device, information about a reason why a response has changed, the method comprising:
outputting a first response by processing at least one module according to a first input;
obtaining information about a history of a second response output according to a second input having a same intention as an intention of the first input, the second response being different from the first response;
identifying, as a changed module, a module operated differently from at least one module operated according to the second input from among at least one module operated according to the first input, based on the obtained information; and
providing information about the reason why the first response has changed from the second response based on the changed module.

2. The method of claim 1, wherein the identifying of the module as the changed module comprises:
matching the at least one module operated according to the first input with the at least one module operated according to the second input; and
identifying the changed module based on a result of a comparison between pieces of information processed in the matched modules.

3. The method of claim 1, wherein the identifying of the module as the changed module comprises:
obtaining input information and output information of a first module among the at least one module operated according to the first input;
identifying information about a first' module matching with the first module from among information about the at least one module operated according to the second input, based on the input information; and
based on the output information of the first module being different from output information of the first' module, identifying the first module as the changed module.

4. The method of claim 3, wherein the identifying of the information about the first' module comprises:
converting the input information of the first module into a hash value; and
identifying information about a module including a same hash value as the converted hash value from the information about the at least one module operated according to the second input, as the information about the first' module.

5. The method of claim 1, wherein the identifying of the module as the changed module comprises:
determining priority of the at least one module operated according to the first input;
comparing information processed in the at least one module operated according to the first input with information processed in the at least one module operated according to the second input, sequentially, according to the priority; and
identifying the changed module based on a result of the comparing.

6. The method of claim 1, wherein the providing of the information about the reason why the first response has changed to the user comprises:
inferring a reason why the first response is different from the second response, based on the changed module; and
generating information about the reason why the first response has changed, the reason including the inferred reason.

7. The method of claim 1, wherein the providing of the information about the reason why the first response has changed to the user comprises:
training, in advance, at least one artificial intelligence (Al) model used to generate a response to an input, based on the changed module, such that a response including the information about the reason why the first response has changed is generated with respect to an inquiry related to a change of the first response; and
outputting, according to reception of an input including the inquiry related to the change of the first response, a response including the information about the reason why the first response has changed, based on the AI model trained in advance.

8. An electronic device configured to provide information about a reason why a response has changed, the electronic device comprising:
an outputter configured to output a first response by processing at least one module according to a first input; and
a processor configured to: obtain information about a history of a second response output according to a second input having a same intention as an intention of the first input, the second response being different from the first response,
identify, as a changed module, a module operated differently from at least one module operated according to the second input from among at least one module operated according to the first input, based on the obtained information, and
provide information about a reason why the first response has changed from the second response based on the changed module.

9. The electronic device of claim 8, wherein the at least one processor is further configured to: match the at least one module operated according to the first input with the at least one module operated according to the second input, and
identify the changed module based on a result of a comparison between pieces of information processed in the matched modules.

10. The electronic device of claim 8, wherein the at least one processor is further configured to: obtain input information and output information of a first module among the at least one module operated according to the first input,
identify information about a first' module matching with the first module from among information about the at least one module operated according to the second input, based on the input information, and
based on the output information of the first module being different from output information of the first' module, identify the first module as the changed module.

11. The electronic device of claim 10, wherein the at least one processor is further configured to: convert the input information of the first module into a hash value, and
identify information including a same hash value as the converted hash value from among the information about the at least one module operated according to the second input, as the information about the first' module.

12. The electronic device of claim 8, wherein the at least one processor is further configured to: determine priority of the at least one module operated according to the first input,
compare information processed in the at least one module operated according to the first input with information processed in the at least one module operated according to the second input, sequentially, according to the priority, and
identify the changed module based on a result of the comparing.

13. The electronic device of claim 8, wherein the at least one processor is further configured to: infer a reason why the first response is different from the second response, based on the changed module, and
generate information about the reason why the first response has changed, the reason including the inferred reason.

14. The electronic device of claim 8, wherein the at least one processor is further configured to: train, in advance, at least one artificial intelligence (Al) model used to generate a response to an input, based on the changed module, such that a response including the information about the reason why the first response has changed is generated with respect to an inquiry related to a change of the first response, and
control the outputter to output, according to reception of an input including the inquiry related to the change of the first response, a response including the information about the reason why the first response has changed, based on the AI model trained in advance.

15. A computer-readable recording medium having recorded thereon a program for implementing the method according to claim 1.
